## Europäisches Patentamt
## European Patent Office
## Office européen des brevets

(11) Publication number: **0 325 495**
A2

# EUROPEAN PATENT APPLICATION

(21) Application number: **89300606.4**

(22) Date of filing: **23.01.89**

(51) Int. Cl.⁴: **B 24 B 19/14**

(30) Priority: **22.01.88 GB 8801421**

(43) Date of publication of application:
**26.07.89 Bulletin 89/30**

(84) Designated Contracting States:
**AT BE CH DE ES FR GB GR IT LI LU NL SE**

(71) Applicant: **CENTRAX LIMITED**
**Shaldon Road**
**Newton Abbot Devon TQ12 4SQ (GB)**

(72) Inventor: **Barr, Richard Henry Howard**
**Shaldon Road**
**Newton Abbot Devon TQ12 4SQ (GB)**

(74) Representative: **Robinson, Anthony John Metcalf et al**
**Kilburn & Strode 30 John Street**
**London, WC1N 2DD (GB)**

The title of the invention has been amended (Guidelines for Examination in the EPO, A-III, 7.3).

(54) **Method and apparatus for grinding aerofoil surfaces.**

(57) A method and a machine for grinding blades for axial flow machines such as compressor blades for gas turbine engines comprises providing a grinding wheel (25;41) having a crowned surface of a width equal to a major part of the length of the aerofoil section of the blade, supporting the blade in a position to be ground with its longitudinal axis (46) generally parallel with the axis (42) of rotation of the wheel, and producing a relative rocking motion between the two axes generally in a plane containing the two axes to move the region of the contact between the wheel and the blade from one edge to the other of the wheel and from adjacent one end to adjacent the other end of the blade. Thus, the site of grinding moves from one end of the blade to the other without relative movement between the blade and the wheel in direction parallel with the axis of rotation of the wheel.

FIG.8.

EP 0 325 495 A2

## Description

### Improvements Relating to Grinding

This invention relates to grinding and is concerned with both methods of grinding and to apparatus suitable for carrying out the method. The invention is applicable to the grinding of the aerofoil surfaces of blades for rotodynamic axial flow machines. Thus, the invention may be applied to blades for pumps, compressors and turbines for use with liquids, vapours and gases but is particularly applicable to the grinding of compressor blades for use in gas turbine engines.

Various processes are used for the forming of compressor blades including precision casting, profile cutting and grinding. However, with present processes and particularly with blades of the hard materials now being used for the high pressure ends of the compressors of gas turbine engines it is necessary to grind the surfaces in a number of passes. Thus a grinding wheel is used which has a thickness which is only a small fraction of the length of the blade so that the blade has to be moved in a direction generally parallel to the axis of rotation of the grinding wheel in order to effect a pass along the length of the blade. Some components can now be ground without such travel by using a grinding wheel having an appropriate surface profile and using massive mountings, the width of the grinding wheel being approximately equal to the width of the zone to be machined, a considerable depth of metal being cut in a single pass using the techniques of so called creep feed grinding. However such techniques are not possible with aerofoil shaped blades because of the various variations in the shape of the blade so that it is not sufficient to give the blade the shape dictated by the profile of the grinding wheel. It has been proposed in GB-A-635 775 to employ a grinding wheel having a convex surface but the machine described therein is only capable of grinding blades with straight or curved coincident lines but is incapable of producing blades of more complex shapes, i.e. with twist.

According to one aspect of the present invention, a method of grinding the aerofoil surface of a blade for a rotodynamic axial flow machine comprises providing a grinding wheel having a crowned surface of a width equal to a major part of the length of the aerofoil section of the blade, supporting the blade in a position to be ground with its longitudinal axis generally parallel with the axis of rotation of the wheel, and is characterised by producing a relative rocking motion between the two axis generally in a plane containing the two axes to move the region of contact between the wheel and the blade from one edge to the other of the wheel and from adjacent one end to adjacent the other end of the blade.

According to a second aspect of the present invention, apparatus for grinding the aerofoil surface of a blade for a rotodynamic axial flow machine comprises a grinding wheel having a crowned grinding surface, support means to support the blade in a position to be ground with its longitudinal axis generally parallel with the axis of rotation of the wheel, and means for rocking the support means about an axis generally perpendicular to the said axes.

It will be understood that in the grinding of a blade in accordance with the invention, the site of grinding moves from one end of the blade to the other but there is substantially no relative travel between the blade and the wheel in directions generally parallel to the axis of rotation of the wheel.

It is desirable to provide means for producing additional relative movements between the grinding wheel and the blade, both translatory and rotational and such movements are set out in greater detail in the following description and in the subsidiary claims.

In order to control the many movements necessary to achieve the best results from the invention, these movements are preferably produced by computer numerical control (CNC).

The invention may be carried into practice in various ways but a method of grinding a compressor blade and a machine tool for this purpose, both in accordance with the invention, will now be described by way of example with reference to the accompanying drawings, in which:

Figure 1 is a perspective view of a typical compressor blade;

Figure 2 is a longitudinal section of the blade on the plane II-II in Figure 1 and shows one stage in the grinding of the compressor blade in accordance with the method of the invention;

Figure 3 is a longitudinal section similar to Figure 2 and shows another stage in the grinding of the blade;

Figure 4 shows two stages similar to those shown in Figures 2 and 3 of the grinding of a blade whose longitudinal axis is curved;

Figure 5 is an orthogonal diagram showing the operation of a machine tool arranged to carry out a method in accordance with the invention;

Figure 6 is an end elevation of a practical embodiment of such a machine tool;

Figure7 is a plan view of the machine tool shown in Figure 6; and

Figure 8 is a detailed orthogonal view showing to a larger scale the operative parts of the machine tool shown in Figures 6 and 7 and viewed from a similar direction to that of Figure 5.

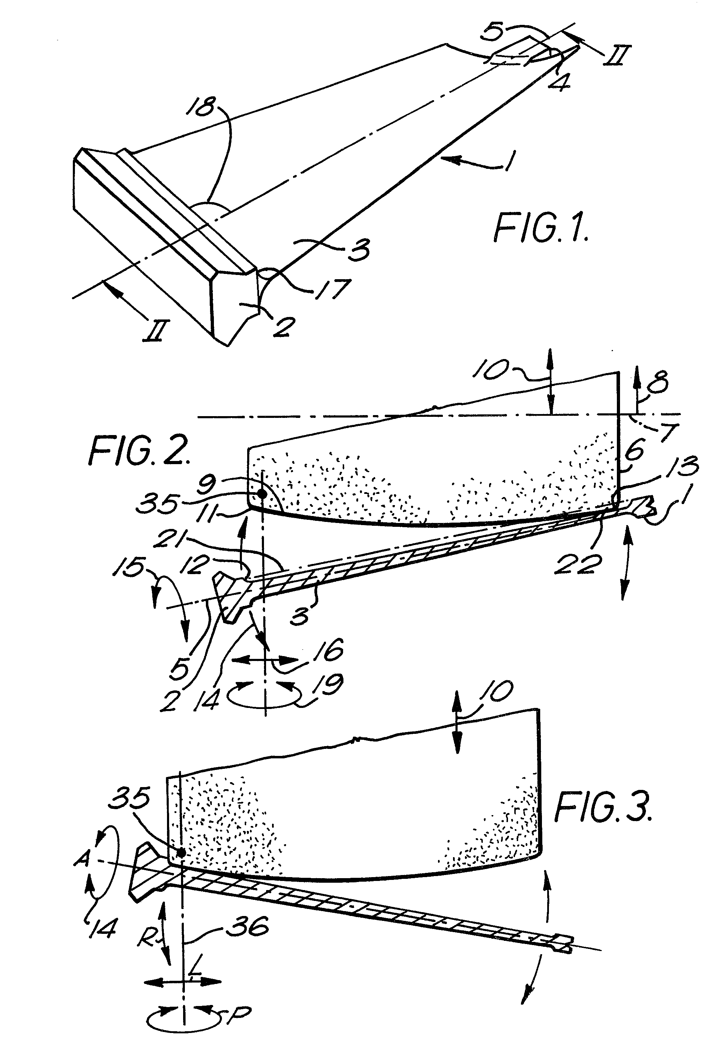

Figure 1 shows a typical compressor blade 1 having a root section 2, an aerofoil section 3 and a tip section 4. As can be seen from Figures 2 and 3, the blade is substantially straight when viewed along the longitudinal axis 5.

In accordance with the invention, the aerofoil surface of the blade is ground by arranging the longitudinal axis 5 of the blade and the axis of rotation of a crowned grinding wheel generally in a common plane and rocking the axes relative to one another in this plane. In order that this process should be better understood, reference may be made to Figures 2 and 3 which show the grinding of a small longitudinally extending strip of the surface of the blade. These figures show the blade 1 in section and show a small part of a grinding wheel 6 whose axis of rotation is parallel to the line 7 but is located some distance above the part shown in the Figures in the direction of the arrow 8. The grinding wheel is so dressed that its edge or rim is formed with a shallow crown 9, a radius 11 on one corner of a shape corresponding to the desired fillet 12 between the aerofoil section 3 and the root section 2 of the blade, and a radius 13 on the other corner which is shaped to form the blade adjacent the tip 1.

The general principle of the grinding of the surface of the blade in accordance with the invention may be gathered from Figures 2 and 3. The longitudinal axis 5 of the blade and the axis of rotation of the grinding wheel lie in the plane of the paper. With these axes inclined to one another in the position shown in Figure 2 the grinding wheel grinds a region of one side of the blade adjacent the tip 1. With the axis 8 of the grinding wheel stationary the inclination of the axis 5 of the blade is changed, still in the plane of the paper, from the position shown in Figure 2 to the position shown in Figure 3. Accordingly the point on the surface of the blade being ground will move from the corner 13 adjacent the tip along the length of the blade to the fillet 12 adjacent the root 2. This completes a single pass of the grinding wheel. The inclination of the axis 5 with respect to the axis 8 is then changed back from the position shown in Figure 3 to the position shown in Figure 2. This completes a second pass in the opposite direction.

It will be understood that to maintain contact between the blade and the grinding wheel during the rocking motion described, it is necessary to superimpose a relative movement between the blade and the grinding wheel which is perpendicular to the axis of rotation of the wheel and in the plane centering the axes of the wheel and the blade (arrows 10). The instantaneous centre 35 for the rocking motion may be at various points but it is preferred to place it on a line 36 passing through the centre of the radius formed at the edge of the grinding wheel which is to form the fillet 12.

Superimposed on the rocking motion described is a rotation of the blade about the longitudinal axis 5 as indicated by the arrows 14 to provide the feed so that on each pass a new strip of the surface of the blade will be ground. Thus substantially the whole length of the blade is ground by the grinding wheel by rocking the axis of the blade relative to the axis of the grinding wheel and substantially without relative movement between the blade and the grinding wheel in directions parallel to the axis 8 of the grinding wheel. However in most cases it will be necessary to make provision for travel of the blade in directions parallel to the axis 8 as indicated by the arrow 16 in order to accommodate particular shapes of root and tip. For example in many blades the root platform 17 into which the fillet 12 runs is inclined to the longitudinal axis 5 as indicated by the angle 18 in Figure 1. In addition and in order to provide greater flexibility in the use of the process there should preferably be provided means for rotating the blade relative to the grinding wheel about an axis perpendicular to the rotational axis 7 of the grinding wheel as indicated by the arrows 19. Finally means should be provided for relative travel between the blade and the grinding wheel in directions perpendicular to the plane containing the axes 5 and 7, i.e. in and out of the plane of the Figures 2 and 3. This is desirable to maintain the line of contact between the grinding wheel and the blade in the original plane since otherwise rotation of the blade about the longitudinal axis 5 would move the line of contact between the grinding wheel and the blade to one side or the other of the initial plane.

Figure 2 shows a line 21 indicating the original surface of the blank from which the blade is to be ground and this indicates that a considerable depth of metal is removed in a single pass. However, due to the rocking of the blade between the positions shown in Figures 2 and 3 and because of the crowned profile of the grinding wheel 6, only a fraction of the length of the blade is being ground at any one time. Thus in the position shown in Figure 2 only the region 22 formed between the crowned surface of the grinding wheel 6 and the surface 21 of the blade is being ground and only the small area, theoretically a point, at which the finished surface of the blade is tangential to the crowned surface of the grinding wheel is being finished at any instant. For this reason it is possible to grind away a substantial depth of metal during each pass and it is not necessary to carry out the removal of substantial depths of metal in a plurality of separate grinding operations.

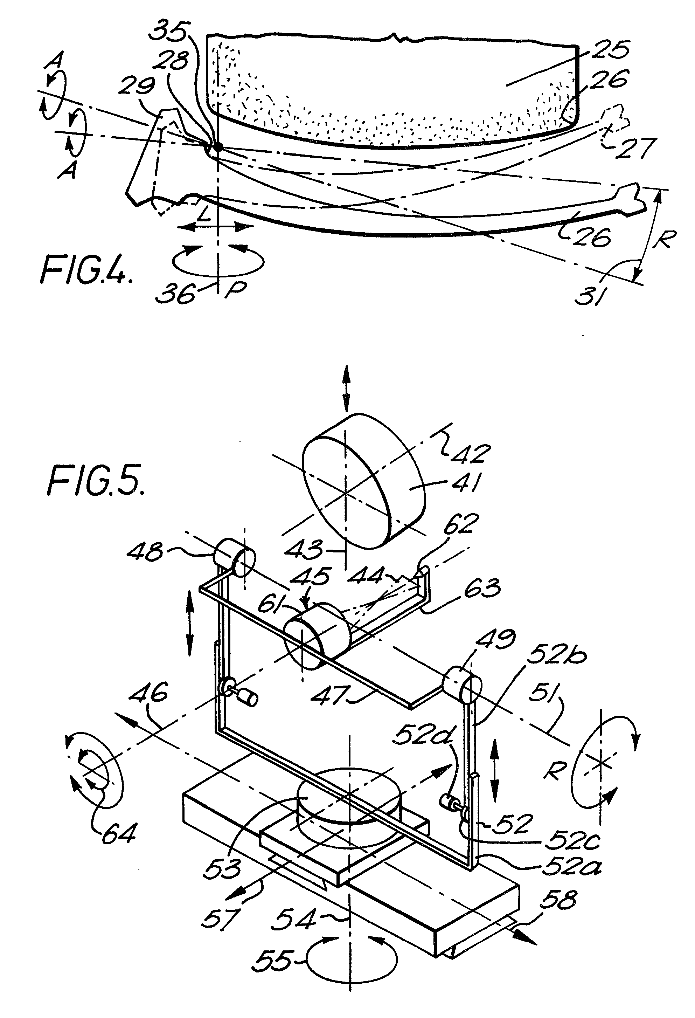

Figure 4 which is a composite similar to a superimposition of Figures 2 and 3 shows the use of a grinding wheel 25 to grind a blade 26 whose longitudinal axis is curved. As with the operations already described, grinding proceeds from a point adjacent one corner 26 of the grinding wheel adjacent the tip 27 of the blade to the opposite corner 8 of the grinding wheel adjacent the root 29 of the blade by rocking of the longitudinal axis of the blade through an angle 31.

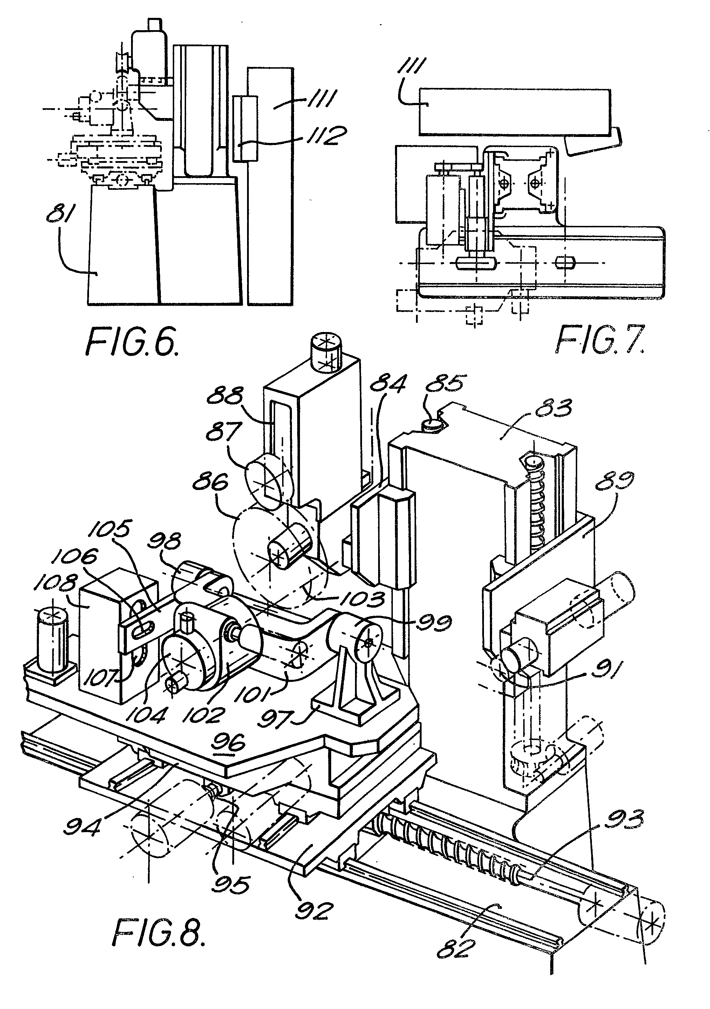

Figure 5 shows in diagrammatic form the various movements described. Thus Figure 5 shows a grinding wheel 41 rotating about an axis 42 and having a feed in the vertical direction 43 to move it into contact with a blade 44 which is supported in a holder 45 providing for rotation of the blade about its longitudinal axis 46. The holder 45 is itself mounted in a yoke 47 mounted on trunions 48,49 by which the blade may be rocked about an axis 51 to produce grinding in passes extending from one end to the other end of the blade 44 and from one edge to the opposite edge of the grinding wheel 41 in the manner described. The trunions themselves are mounted on a support 52 which is carried by a table 53 having provision for rotation about a vertical axis 54 as indicated by arrows 55 and for horizontal movement in two directions at right angles, namely a first feed in the direction of arrow 57 in directions parallel with the axis 42 of the grinding wheel 41 and a cross feed in the direction of the arrow 58 in directions perpendicular thereto.

The support 45 carrying the blade 44 comprises what may be termed a headstock portion 61 in which the root of the blade is fixed, a tailstock portion 62 in which the tip portion of the blade is fixed and an outreach arm 63 extending from the headstock 61 to the tailstock 62 and lying offset from the axis of rotation 46. Because of the presence of the outreach arm 63 it is not possible to grind the undersurface of the blade 44 merely by rotating the holder 45 through 180° because the outreach arm 63 would then lie between the blade 44 and the grinding wheel 41. Accordingly the headstock portion 61 has provision for rotating the blade 44 through 180° relative to the headstock portion 61 as indicated by the arrows 64.

Relative vertical movement between the grinding wheel 41 and the blade 44 is achieved both by a vertical feed on the grinding wheel and by changes to the lengths of the vertical legs of the support 52. For this purpose each of these legs is in two parts 52a.52b connected by a slide connection, the lower part 52a carrying a cam 52c which engages a cam follower on the upper part 52b. The cams 52c are rotated by motors 52d according to a suitable program to produce the desired relative vertical movement in the vertical direction 43. By combining the feed of the wheel 41 with cam controlled movement of the blade, the feed of the wheel has to make smaller movements.

Figures 6, 7 and 8 show a machine tool constructed to operate to grind compressor blades in the manner described. The machine comprises a massive base 81 having a bed 82 and a heavy column 83. The column 83 supports for vertical reciprocation a first grinding head 84 whose position is controlled by a lead screw 85. This head carries in cantilever fashion a grinding wheel 86 having a crowned periphery of the profile already described. The head also carries a dressing wheel 87 which can be moved vertically in guides 88 into engagement with the periphery of the grinding wheel 86 to continuously dress it. On the opposite side of the column 83 is a second grinding wheel head 89 carrying a second grinding wheel 91 of smaller diameter than the grinding wheel 86. This grinding wheel is also provided with a dressing wheel but this and its supporting structure has been omitted from Figure 8. The bed 82 carries a table 92 which can be moved horizontally in directions perpendicular to the axis of rotation of the grinding wheel 86 by means of a lead screw 93. A second table 94 is mounted on the table 92 and can be moved in directions parallel to the axis of rotation of the grinding wheel 86 by means of a lead screw 95. Mounted on the table 94 for rotation about a vertical axis is a third table 96 which supports a pair of massive brackets 97 carrying journals 98,99 whose axes are perpendicular to the axis of rotation of the grinding wheel 96 and parallel to the axis of the lead screw 93. The journals 98 and 99 carry trunions on a yoke 101 which carries a support 102 for a blade to be ground and which may be described as a headstock. The blade to be ground extends with its axis along the line 103 generally parallel to the axis of rotation of the grinding wheel 86. The head 102 includes means 104 for rotating the blade during grinding to provide the necessary feed and also for rotating the blade through 180° to obtain access to the opposite face of the blade without rotating the outreach arm and headstock as described in relation to Figure 5, these components not being shown in Figure 8. The yoke 101 carries an arm 105 having a slot 106 into which passes a pin, not shown, which can be reciprocated vertically in a slot 107 formed in an actuator housing 108.

Operation of the machine shown in Figures 6, 7 and 8 will in general be understood from the previous discussion. However it should be pointed out that the larger grinding wheel 86 is used to grind the convex surface of the blade. However this wheel has too large a diameter to fit within the concave surface of the blade and accordingly the blade is moved by means of the lead screw 93 into a location where it can be operated upon by the smaller grinding wheel 91. All operations are under CNC provided by a control unit 111 having a control panel 112.

**Claims**

1. A method of grinding the aerofoil surface of a blade (3;44;86) for a rotodynamic axial flow machine which comprises providing a grinding wheel (25;41) having a crowned surface of a width equal to a major part of the length of the aerofoil section of the blade, supporting the blade in a position to be ground with its longitudinal axis (46) generally parallel with the axis (42) of rotation of the wheel, characterised by producing a relative rocking motion between the two axes generally in a plane containing the two axes to move the region of the contact between the wheel and the blade from one edge to the other of the wheel and from adjacent one end to adjacent the other end of the blade.

2. A method according to Claim 1 in which the blade is rotated about an axis coincident with or parallel to the longitudinal axis of the blade to afford a feed to the grinding operation.

3. A method according to Claim 2 in which the blade is moved in directions (58) perpendicular to the plane containing the two axes to maintain the region of contact in the said plane.

4. Apparatus for grinding the aerofoil surface of a blade (44) for a rotodynamic axial flow machine which comprises a grinding wheel (41;86) having a crowned grinding surface, support means to support the blade in a position to be ground with its longitudinal axis generally parallel with the axis of rotation of the wheel, and means for rocking the support means about an axis generally perpendicular to the said axes.

5. Apparatus according to claim 4 which includes means for rotating a blade carried by the support means generally about the longitudinal axis of the blade.

6. Apparatus according to claim 4 or claim 5 which includes means for relatively moving the grinding wheel and the blade towards and away from each other.

7. Apparatus according to claim 4 or claim 5 which includes means for moving the grinding wheel towards the blade and further means (52c,52d) for moving the blade towards the grinding wheel.

8. Apparatus according to any of claims 4 to 7 which includes means for moving the blade in a direction perpendicular to the plane containing the two said axes

9. Apparatus as claimed in any of claims 4 to 8 which includes means for moving the blade in a direction generally parallel to the axis of rotation of the grinding wheel.

10. Apparatus as claimed in any of claims 4 to 9 which includes means for rotating the blade about an axis lying in the said plane and perpendicular to the axis of rotation of the grinding wheel.

11. Apparatus as claimed in any of claims 4 to 10 which includes a second grinding wheel having a crowned grinding surface and of a different diameter from the first, the support means being movable relative to the two grinding wheels to position a blade mounted therein to be ground by either wheel.

12. Apparatus as claimed in any of claims 4 to 11 in which the support means includes two holders to hold the respective ends of the blade, means interconnecting the two holders and means for rotating the blade in the support means through 180°.

13. Apparatus as claimed in any of claims 4 to 12 which includes a dressing wheel in dressing engagement with the grinding wheel.

14. Apparatus as claimed in any of claims 4 to 13 which includes computer numerical control means controlling each of the movements of the apparatus.

09 02 89

FIG.1.

FIG.2.

FIG.3.

FIG.4.

FIG.5.

FIG.6.

FIG.7.

FIG.8.